Europäisches Patentamt

European Patent Office

Office européen des brevets

(11) Publication number: **0 244 079 B1**

## EUROPEAN PATENT SPECIFICATION

(45) Date of publication of patent specification: **25.11.92**

(51) Int. Cl.⁵: **B01D 1/00**, C13F 1/02, C13G 1/06

(21) Application number: **87302521.7**

(22) Date of filing: **24.03.87**

(54) **Process and apparatus for controlling the composition of a mixture leaving an evaporator.**

(30) Priority: **25.03.86 US 843632**

(43) Date of publication of application:
**04.11.87 Bulletin 87/45**

(45) Publication of the grant of the patent:
**25.11.92 Bulletin 92/48**

(84) Designated Contracting States:
**AT BE CH DE ES FR GB GR IT LI LU NL SE**

(56) References cited:
EP-A- 0 173 029          BE-A- 430 875
DE-A- 2 113 292          FR-A- 2 508 672
US-A- 3 981 739          US-A- 4 056 364

(73) Proprietor: **SOCIETE DES PRODUITS NESTLE S.A.**
**Case postale 353**
**CH-1800 Vevey(CH)**

(72) Inventor: **Leschke, Rudolph Johann**
**10 Lynn Drive**
**Andover, New Jersey 07821(US)**
Inventor: **Regan, Paul Francis**
**350 Parsippany Road, Apt. 116**
**Parsippany, New Jersey 07054(US)**

## Description

Background of the Invention

This invention relates to a process and apparatus for controlling the composition of a mixture leaving an evaporator.

In many industrial processes an evaporator is used to adjust the relative proportions of the two components in a mixture comprising a first, relatively non-volatile component and a second component which is more volatile than the first component. The exact chemical and physical properties of the two components are not critical provided a significant difference in volatility is present. For example, the first component may comprise a substantially non-volatile solid, such as a sugar, and the second component comprise water. Alternatively, the first component may be a relatively non-volatile liquid and the second component a more volatile liquid.

Such evaporators are frequently of the multi-stage type, in which a feed stream of the mixture is supplied to a first stage, in which it is heated and part of the second component distilled off. The mixture is reheated, and additional second component distilled off, to produce a mixture which is further enriched in the first component. Third, fourth, etc. stages may be added if necessary.

Controlling the operation of such multi-stage evaporators presents difficult problems. Often, it is necessary to control the operation so as to ensure that the final mixture emerging from the multi-stage evaporator has a predetermined composition within tight tolerances. For example, when a multi-stage evaporator is used to concentrate an aqueous sugar solution for use in the production of candy or other foodstuffs, the concentration of sugar in the final solution must be closely controlled since even modest variations in this concentration may have significant effects on the crystallization temperature, viscosity and other properties of the final sugar solution, so that significant variations in the sugar concentration may cause difficulties in the later operations required to form the candy or other foodstuffs.

The concentration of the final solution emerging from such a multi-stage evaporator is affected by a large number of variables, including many of the typical variables inherent in any complicated chemical processing plant, for example, slight variations in the rate of supply of heat to the solutions in the various stages of the evaporator caused by variations in the rate of flow of the heat transfer medium used, usually steam, variations in the rate at which mechanical pumps pump the solution to the evaporator, etc. In addition, since the feed solution is usually made up by weighing and mixing a number of components, the concentration of the final solution is also subject to weighing errors. Finally, since sugars are natural products, variations may occur in the sugar products themselves, for example, in the concentration of sugar in the form of a corn syrup or other sugar syrup.

Hitherto, multi-stage evaporators have been controlled by a feedback system in which the final solution has been analyzed to determine the proportions of the components therein, and the analytical results used to control the heat input to the evaporator, for example by controlling the supply of steam thereto. Not only does such feedback control suffer from the inherent disadvantage that it is reactionary (i.e., it only reacts to a change in the concentration of the product mixture after such a change has taken place, and thus inevitably lags behind the changes in operation of the evaporator by a period at least equal to the time taken for the solution to pass through the evaporator from the point(s) at which the heat supply is controlled to the point in which the analysis samples are taken), but in addition, hitherto, there has been no method which can be applied under industrial conditions and which is capable of measuring the concentration of a concentrated sugar solution substantially instantaneously. The throughputs of industrial multi-stage evaporators are sufficiently large that any delay in producing analytical results indicating that the product fails to meet specifications will result in the generation of significant amounts of unacceptable product, with consequent economic losses. Thus, manual analysis of the product mixture by evaporating a sample to dryness and measuring the remaining solid, although highly accurate, is so slow as to necessarily cause the generation of large quantities of unacceptable product whenever the product drifts off specification. Attempts have been made to use densiometers and refractometers to measure the proportions of sugar in a sugar solution. Although densiometers and refractometers do produce substantially instantaneous analytical results, thereby avoiding the problems of delay experienced with manual analysis, with highly concentrated solutions of sugars and other highly soluble materials the accuracy of the analytical results produced by densiometers and refractometers is too low to provide sufficiently precise control to meet the close tolerances of product specification required in many industrial processes.

The control of a multi-stage evaporator is similar in many respects to control of other continuous processes used in many industrial material processing applications, and a wide variety of methods for controlling such continuous processes are known. For example, various methods have been proposed for controlling the degree of crystallization during the evaporation of sugar solutions.

U.S. Patent US-A-4,056,364 to Dmitrovsky et al. describes a two-stage crystallization process for crystallization of various solutes, primarily sugars. A solution of the solute is introduced into a first stage evaporative-crystallization zone together with seed solute crystals, the solution is concentrated to yield a saturated first stage concentrate containing crystals of the solute, which are substantially larger than the seed crystals and are suspended in a solution more concentrated with respect to the solute than the solution fed to the first stage zone. A stream of the first stage concentrate is removed from the first stage zone and transferred to a second evaporative-crystallization zone for further concentration or crystallization of solute and the production of solute crystals of increased size. There is no teaching of measuring the concentration of the stream leaving the first stage and using this concentration to control the operation of the second stage zone. Furthermore, the entire teaching of the patent relates to crystallization of the solute, not merely the concentration of a homogeneous solution.

U.S. Patent US-A-4,196,385 to Vestergaard et al. describes a method and apparatus for measuring the concentration of a solid/liquid mixture, especially sugar crystals in a syrup. The concentration measuring method relies upon the variation of dielectric constant of the fluid with the relative proportions of solid and liquid. Electric oscillations are supplied from a source through an impedance matching link to an antenna placed in the liquid within the confines of a Faraday cage, and the electric power reflected from the antenna towards the source is measured to determine deviations from ideal matching resulting from changes in the dielectric constant of the fluid, resulting from changes in the proportion of solid therein. Column 1, lines 37-47 of the patent discusses methods for control of the concentration of a solution by measuring increases in its boiling point and points out that this method is not suitable for the final crystallization stages.

Doty and Granville, Microprocessor Control of a Double-Effect Evaporator, Proceedings of the Microcomputer Based Instrumentation Conference, Gaithersburg, Maryland (June 12-13, 1978), pages 33-44 describes microprocessor control of a double-effect evaporator, the specific evaporator discussed being used for the concentration of fruit juice. The microprocesor control is used to minimize the start-up time of the double-effect evaporator using heat balance equations. There is no feed-forward control from the first to the second stage of the evaporator.

Automatic methods are also known for controlling the concentration of the various components in the output from a cracking furnace.

U.S. Patent US-A-4,231,753 to Stewart describes a process for the control of a cracking furnace in which the heat supplied to the furnace is controlled in response to a calculation of the heat required to maintain a desired conversion rate for the material being cracked in the cracking furnace. The flow rates of the steam and feed material supplied to the cracking furnace are measured, and the feed material itself is analyzed to predict the heat required to maintain a desired conversion rate, then the fuel supply to the furnace is manipulated to provide the calculated heat requirement, thus providing a form of feed-forward control. The calculated heat requirement is corrected by a comparison of the actual conversion rate with the desired conversion rate. In addition, to prevent damage to the furnace, loss of the flow of feed to the furnace is detected and the flow of steam thereto increased to compensate for the loss of feed flow. Obviously, in such an apparatus there can be no reliance upon measuring the boiling point of the material being processed at any stage.

U.S. Patent US-A-4,349,869 to Prett et al. describes a method for controlling and optimizing the operation of a series of interdependent processes in a plant environment. Manipulation of one or more constrained process input variables is used to achieve feedforward/feedback control of one or more process output variables. To determine the correlations between the input and output variables, input variables are subjected to measured perturbations and the dynamic effects of these perturbations on the outputs are noted for prediction of future response of the processes during on-line operation. There is no teaching of the measurement of a boiling point of a solution and use of this boiling point for feedforward control of a later stage of the process.

U.S. Patent US-A-4,536,606 to Hobbs describes a process for manipulating the heat provided to a cracking furnace so as to maintain the actual conversion of a first component in the feed stream to the cracking furnace substantially equal to a desired conversion for this component. The actual conversion of the first component is determined by analyzing the concentration of the first component in the feed stream, analyzing the concentration of the first component in the product stream, estimating the conversion of the first component and calculating the expansion of the feed stream in the cracking furnace. The calculated actual conversion is compared to a desired conversion and used, together with the feed flow rate, to manipulate the heat provided to the cracking furnace. Again, in such a process there can be no measurement of a boiling point and use of this boiling point for feedforward control of a later stage of the process.

U.S. Patent US-A-4,257,105 to Stewart describes a process for controlling the flow rate of a diluent fluid, such as steam, hydrogen or methane, to a cracking furnace so as to maintain a desired outlet velocity for the effluent flowing from the cracking furnace or to maintain a desired residence time for the feed stream in the cracking furnace. Feedforward control for the flow rate of the diluent fluid is provided by using an empirical model of the cracking furnace to predict either the outlet velocity or the residence time based upon measured system parameters. Feedback control for the flow rate of the diluent fluid is provided by calculating the actual outlet velocity or actual residence time based on measured system parameters. The measured outlet velocity or residence time is utilized to bias or correct the predicted outlet velocity or residence time to provide a corrected prediction of the outlet velocity or residence time. Again, in such a process there can be no measurement of a boiling point and use of this boiling point for feedforward control of a later stage of the process.

Other miscellaneous techniques for control of process conditions and/or output streams are described in the following patents.

U.S. Patent US-A-4,173,215 to Bureau et al. describes an apparatus for steaming food at substantially atmospheric conditions. Steam is generated in a steam/generating chamber 67 and passes to a steaming chamber 33 in which the food to be steamed is placed. Excess steam escapes by a vent 111 into a condensing chamber 121 provided with a spray nozzle 133 through which cold water is sprayed to condense the excess steam. A temperature sensor is provided within the chamber 121 to sense the temperature of the water and condensed steam in the condensing chamber, and the output from this temperature sensor is used to control the generation of steam in the apparatus.

U.S.S.R. Patent SU-A-785,353 discloses an apparatus for the controlled steaming of starch-containing material in which the actual temperature of the mass being steamed is measured after the "secondary-heating contact head" and this measured temperature is used to regulate a valve controlling the steam supply. The steam flow-rate setting is determined by the measured temperature, the flow-rate of a water/grain mix and the actual and predetermined temperatures of the mass after the contact head.

U.S. Patent US-A-4,437,934 to Nelson et al. describes a process for manufacturing tomato products to a predetermined consistency standard. A tomato extract feedstock has its initial precipitate weight ratio and initial Brix level measured. From these measurements an expected precipitate weight ratio and an expected Brix level of the tomato product are calculated and the degree of concentration controlled to provide the predetermined consistency.

U.S. Patent US-A-4,519,304 to Ripani describes a device for controlling and monitoring the thickness of a chocolate film delivered by chocolate refiners. An indirect measurement of the instantaneous chocolate film thickness effected by a colorimetric technique is used to determined the instantaneous thickness, the colorimetric readout head being arranged to reciprocate across the entire width of the film. The readout head also checks the integrity of the chocolate film being delivered by detecting the appearance of dry band areas and can also stop the machine if such lack of integrity appears for a predetermined time.

U.S. Patent US-A-3,826,905 to Valkama et al describes a method for automatically controlling a chromatographic process for the separation of two components (a glucose/fructose mixture is used in the specific description). The chromatographic process produces two relatively pure fractions, which are the final products of the process, and an intervening impure fraction which is recycled. Continuous measurements are made of the angle of optical rotation, concentration and temperature of the fractions emerging from the process, and these measurements determine the purity of the product stream as it emerges from the chromatographic separating, and thus determine the optimum points at which to change from one fraction to another.

Cane Sugar Handbook, 10th Edition, John Willey & Sons, New York, 1977, pages 185-87, describes the manufacture and the refining of raw cane sugar which require evaporation of water from the sugar solution to yield a final crystalline product. The evaporation is done in two stages: first in an evaporator station to concentrate the solution, and second in a vacuum pan to crystallise the sugar from solution. Evaporator performance is improved by connecting evaporators in series such that the vapour outlet of a first vessel acts as a steam source for a second vessel, each evaporator having separate but thermally connected steam chambers and 'juice' chambers.

Belgian Patent BE-A-430,875 describes the crystallisation of sugar by evaporating a syrup to an optimum degree of supersaturation under vacuum and then seeding the solution. A regulator is provided which operates a vacuum valve and is responsive to the temperature and the degree of vacuum in the evaporation vessel. Determination of concentration by a conductivity method is described as also is provision for determining the liquid level.

French Patent Application FR-A-2,508,672 is concerned with the crystallisation of sugar and describes evaporation apparatus comprising a series of heated compartments. Measurement and regulation of the

EP 0 244 079 B1

concentration are stated to be a problem and the specification indicates that various parameters, such as conductivity, temperature, density and refractive index, have been tried but these have not proved satisfactory with impure solutions. It is therefore proposed to employ crystal content as determined by viscosity or density.

None of the prior art control methods discussed above provides a solution to the problem of controlling the operation of a multi-stage evaporator in a manner which will ensure production of a product having a predetermined composition within tight tolerances without the risk of producing substantial quantities of product failing to meet its specification because of delays in analyzing the product and using the results of such analysis to control the operation of the multi-stage evaporator. This invention provides such a process, and evaporators for use in the process.

Summary of the Invention

This invention provides a process for controlling the composition of a liquid mixture. This process comprises:

effecting a first heating of a feed mixture, this feed mixture comprising a first, substantially non-volatile, component and a second component which is a single material more volatile than the first component;

permitting boiling of the heated feed mixture under a known pressure, thereby producing a first vapor and an intermediate liquid mixture comprising a solution of said first component;

measuring the temperature at which this boiling occurs;

calculating from the measured boiling temperature the proportions of the first and second components therein;

effecting a second heating of the intermediate liquid mixture, and permitting boiling thereof, thereby producing a second vapor and a final liquid mixture; and

controlling the heat input to the intermediate liquid mixture in response to the calculated proportions of the first and second components therein, thereby producing the final liquid mixture with substantially a predetermined composition.

This invention also provides apparatus for the production of a liquid mixture having substantially a predetermined composition, this apparatus comprising:

supply means for supplying a feed mixture comprising a first, substantially non-volatile, component and a second component which is a single material more volatile than the first component;

a first evaporator having an inlet arranged to receive the feed mixture from the supply means, an outlet for a first vapor and an outlet for an intermediate liquid mixture;

first heating means for supplying heat to the first evaporator and thereby causing boiling of the second component from the feed mixture to produce the first vapor and the intermediate liquid mixture, wherein the intermediate mixture comprises a solution of the first component;

a temperature sensor arranged to measure the temperature at which this boiling occurs;

calculating means for calculating from the measured boiling temperature the proportions of the first and second components in the intermediate liquid mixture;

a second evaporator having an inlet for receiving the intermediate liquid mixture from the first evaporator, an outlet for a second vapor and an outlet for a final liquid mixture; and

variable second heating means for supplying heat to the second evaporator, and thereby causing boiling of the second component from the feed mixture to produce the second vapor and the final liquid mixture, the rate of heat supply by the variable second heating means being controllable by the calculating means in response to the calculated proportions of the first and second components so as to produce substantially a predetermined composition in the final liquid mixture.

Brief Description of the Drawings

Figure 1 shows schematically, in block-diagram form, an apparatus of the invention;

Figure 2 shows schematically the internal architecture of the calculating and delay assembly shown in Figure 1;

Figure 3 is a flowchart showing the program carried out by one of the calculating blocks shown in Figure 2 to determine the proportions of the first and second components in the intermediate liquid mixture;

Figure 4 shows schematically the relationship between the energy inputs to the apparatus shown in Figure 1 and the enthalpy of the products thereof; and

Figure 5 shows schematically the program carried out by the calculating and delay of the apparatus shown in Figure 1 to calculate the proper heat input to the second stage of the evaporator.

5

Detailed Description

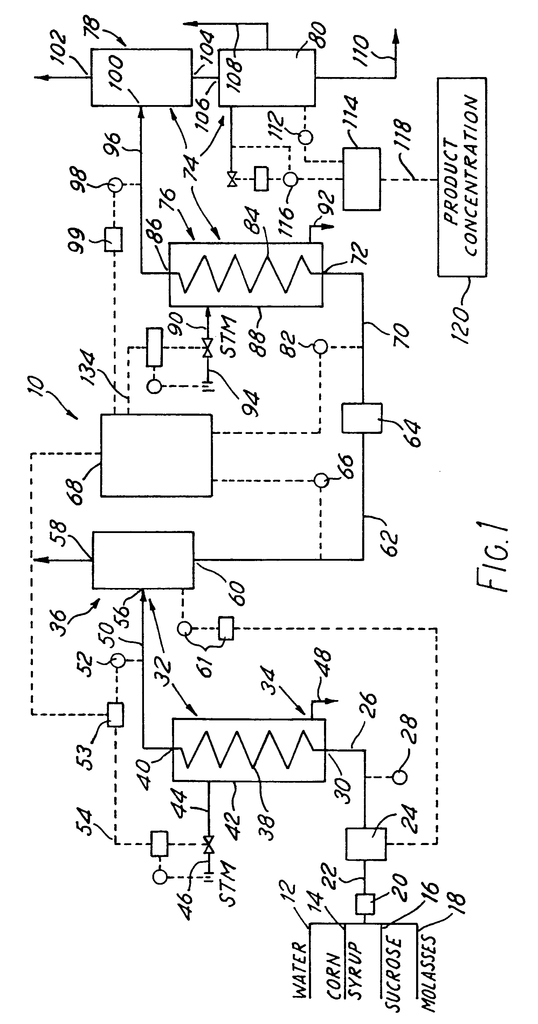

Figure 1 shows a two-stage evaporator (generally designated 10) of the invention, this evaporator being used for concentrating a sugar solution used in the production of candy. The dilute sugar solution used as the feed mixture to the apparatus 10 is produced by feeding weighed batches of water, corn syrup, sucrose and molasses along lines 12, 14, 16 and 18 respectively to a mixer 20, where they are mixed to form a sugar solution. This sugar solution is fed by a line 22 to a positive displacement pump 24, which pumps the solution via a line 26 equipped with a flow sensor 28 to the feed solution inlet 30 of a first stage evaporator, generally designated 32.

Although the mixture produced in the mixer 20 has been referred to as "a sugar solution", in practice this mixture may be either a homogeneous solution or a slurry of solid crystals in a solution, depending upon the concentration of sugar and the temperature at which the mixing is effected, which in practice is usually room temperature. Whether the mixture produced in the mixer 20 is a true solution or a slurry makes no difference to the process of the present invention provided that all the first component dissolves to produce a true solution before the boiling temperature is measured. However, the process of the present invention cannot be operated satisfactorily if any undissolved first component is present when the boiling temperature is measured, since under such circumstances the measured boiling temperature is that of the liquid phase alone, does not vary with the amount of the solid phase present, and thus does not accurately indicate the proportions of the first and second components in the intermediate liquid mixture.

The first stage evaporator 32 comprises a heating section 34 and a vaporizing section 36. (In practice vaporization occurs in both the heating section 34 and the vaporizing section 36. However, the terms "heating section" and "vaporizing section" are used for convenience since the heat input to the solution occurs in the heating section 34 while all the vapor is separated from the solution in the vaporizing section 36.) Within the heating section 34, the sugar solution passes from the feed mixture inlet 30 via a coil 38 to a mixture outlet 40. The coil 38 is disposed within a housing 42. Steam is fed under pressure into the housing 42 via a steam line 44 equipped with a variable flow controller 46 of conventional type. Steam condensate can escape from the housing 42 via a steam condensate outlet line 48.

The heated mixture leaving the mixture outlet 40 of the heating section 34 passes via a line 50 to the vaporizing section 36. The vaporizing section 36 of the first evaporator 32 has an inlet 56 connected to the line 50 and through which the heated mixture enters the evaporator section, a vapor outlet 58 and an intermediate liquid mixture outlet 60. In the vaporizing section 36, the feed mixture from the heating section 34 boils, thereby producing a first vapor stream (steam), which leaves the vaporizing section 36 via the vapor outlet 58, and an intermediate liquid mixture, which is more concentrated than the feed mixture, and which leaves the vaporizing section 36 via the outlet 60. The vaporizing section 36 is equipped with a level controller 61 which regulates the operation of the pump 24.

The line 50 is equipped with a temperature sensor 52 which senses the temperature of the heated stream passing along the line 50. An output signal from the temperature sensor 52 is sent to a temperature controller 53, which in turn sends a signal along a line 54 to the flow controller 46 and controls the operation of this flow controller, thereby controlling the flow of steam along the line 44 so as to ensure that the heated mixture passing along the line 50 is maintained at a predetermined temperature.

The signal from the temperature sensor 52 is also passed, via the temperature controller 53, to a calculating and delay assembly 68. This calculating and delay assembly 68 is described in detail below.

Although for ease of illustration the temperature sensor 52 has been shown in the line 50 outside the vaporizing section 36, in practice it is advisable to place the temperature sensor 52 as close as possible to the outlet of the line 50, which in a commercial apparatus usually has a stub extending inside the housing of the vaporizing section 36. Thus, in practice the temperature sensor 52 will normally be disposed inside the housing of the vaporizing section 36, in the steam, and will thus accurately indicate the temperature at which boiling of the heated feed mixture occurs.

The process of the present invention requires that the temperature at which the heated feed mixture boils be measured in order that this boiling temperature may be used to calculate the proportions of the first and second components in the intermediate liquid mixture produced by this boiling. Provided that this boiling temperature can be measured with sufficient accuracy, the exact location of the temperature sensor used to measure the boiling temperature is not critical. Thus, the relevant temperature sensor may be located in the line 50 by which the heated feed mixture is fed to the vaporizing section, within the vaporizing section itself, or in the line by which the intermediate liquid mixture passes from the vaporizing section of the first stage to the second stage of the evaporator. However, care should be taken not to place the temperature sensor in the line 50 at a point so far removed from the vapor outlet 58 that significant superheating of the located feed mixture can occur adjacent the temperature sensor. Care should also be taken to ensure that the temperature sensor is not installed in the line by which the intermediate liquid mixture passes to the second stage of the evaporator at a point so far from the vaporizing section of the first stage that significant cooling of the intermediate liquid mixture occurs before it reaches the temperature sensor. In both these cases, the temperature sensed by the temperature sensor will not accurately reflect the true boiling temperature of the heated liquid mixture.

Thus, temperature sensed by the temperature sensor 52 is the same as the temperature of the boiling mixture within the vaporizing section 36. Furthermore, this boiling liquid mixture within the vaporizing section 36 is necessarily in equilibrium with the first vapor stream, which leaves the outlet 58 of the vaporizing section 36 under a known pressure, namely the pressure at which the vaporizing section 36 is allowed to operate. (The pressure under which the vapor leaves the outlet 58 is usually atmospheric pressure in most industrial two-stage evaporators, although sub-atmospheric or even super-atmospheric pressure can be employed if so desired. The actual pressure of the vapor leaving the outlet 58 is not critical, providing this pressure is constant, since in the process of the invention it is necessary to know the pressure of water vapor with which the boiling mixture in the vaporizing section 36 is in equilibrium.)

The output from the temperature sensor 52 is fed to the calculating and delay assembly 68.

The intermediate liquid mixture passes from the outlet 60 along a line 62 to the inlet of a positive displacement pump 64. The line 62 is provided with a temperature sensor 66, which senses the temperature of the intermediate liquid mixture passing along the line 62. The temperature sensed by the temperature sensor 66 is used in the heat balance calculations for the second stage of the evaporator, as described in more detail below.

As previously mentioned, the sensor 52, which is used to measure the boiling temperature of the heated liquid mixture, may be located in the line by which the intermediate liquid mixture is fed to the second stage of the evaporator, i.e., in the line 62. Thus, the temperature sensors 52 and 66 may be replaced by a single temperature sensor located in the line 62, and the output from this temperature sensor used both for determining the boiling temperature of the heated liquid mixture and for the heat balance calculations relating to the second stage of the evaporator. However, in practice in most commercial two-stage evaportors, significant heat loss takes place along the length of the line 62 (which is usually of considerable length), so that it is preferred to use two separate temperature sensors as shown in Figure 1. The sensor 66 should be located as close as practicable to the inlet to the second stage of the evaporator in order that the temperature sensed may accurately reflect the temperature at which the intermediate liquid mixture enters the second stage of the evaporator. The distance between the temperature sensor 66 and the second stage of the evaporator is exaggerated in Figure 1 relative to the length of the line 62 for ease of illustration.

The pump 64 pumps the intermediate liquid mixture through a line 70 to the intermediate liquid inlet 72 of a second stage evaporator 74. This second stage evaporator 74 comprises a heating section 76 and a vaporizing section 78, both of which are identical to the corresponding sections 34 and 36 respectively of the first stage evaporator 32. However, the second stage evaporator 74 further comprises a vacuum section 80. The line 70 which feeds the intermediate liquid mixture to the inlet 72 of the second stage evaporator 74 is provided with a flow sensor 82 which measures the rate of flow of the intermediate liquid mixture along the line 70 and sends a signal representative of this rate of flow to the calculating and delay assembly 68.

The heating section 76 of the second stage evaporator 74 has a coil 84, a heated liquid outlet 86, a housing 88, a line 90 for supplying steam to the housing 88, and a steam condensate outlet line 92, all are which identical to the corresponding parts of the heating section 34 of the first stage evaporator 32. Like the line 44, the line 90 is provided with an flow controller 94 to control the flow of steam therealong, but this flow controller 94 is controlled by the calculating and delay assembly 68.

The heated intermediate mixture leaving the outlet 86 of the heating section 76 passes to the vaporizing section 78 along a line 96, which is equipped with a temperature sensor 98. This temperature sensor 98 supplies a signal representative of the temperature of the heated liquid passing along the line 96 to a temperature controller 99, which in turn sends a temperature signal to the calculating and delay assembly 68.

The vaporizing section 78 of the second stage evaporator 74 has an inlet 100 connected to the line 96, a vapor outlet 102 and a final liquid mixture outlet 104, all of which correspond to the inlet 56 and the outlets 58 and 60 respectively of the vaporizing section 36 of the first stage evaporator 32. The vaporizing section 78 acts in exactly the same way as the vaporizing section 36, allowing the heated intermediate liquid mixture from the coil 84 to boil, thereby producing steam or water vapor which leaves the vaporizing section 78 via the outlet 102 and a final liquid mixture, concentrated in sugar relative to the intermediate liquid mixture, this final liquid mixture leaving the outlet 104.

From the outlet 104, the final liquid mixture passes along a line 106 to the vacuum section 80. This vacuum section 80 operates at sub-atmospheric pressure, thereby causing further boiling of the final liquid mixture and evaporation of water therefrom. The resultant water vapor leaves the vacuum section 80 via an outlet line 108 connected to a vacuum pump and the further concentrated final liquid mixture leaves the vacuum section 80 via a produce line 110. The vacuum section 80 is provided with a temperature sensor 112, which measures the temperature of the boiling liquid within the vacuum section 80 and sends a signal representative of this temperature to a calculating device 114. The vacuum section 80 is also provided with a pressure controller 116 which maintains a constant pressure within the vacuum section 80. The calculating device 114 calculates from the temperature signal and the known pressure within the vacuum section 80 the concentration of the final produce stream leaving the vacuum section 80 via the product line 110 and sends a signal indicating this concentration via a line 118 to a display device 120, which provides a visual readout of this concentration in order that the concentration may be checked by the operator.

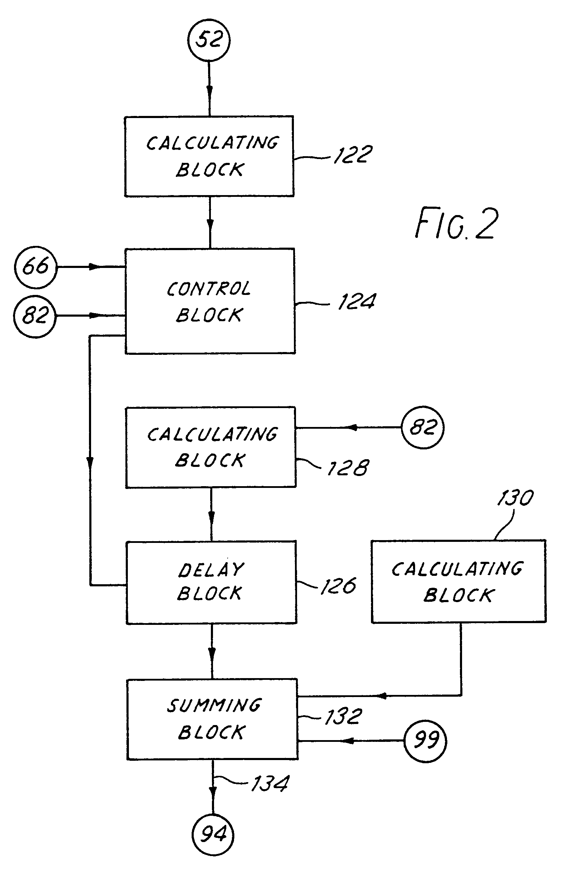

The calculating and delay assembly 68 is shown in a highly schematic manner in Fig. 2. This assembly 68 will now be described, although it should be understood that the blocks referred to below do not necessarily represent separate physical parts of the apparatus but may instead represent separate parts of an overall software program operated by a single microprocessor or other calculating device.

The temperature signal from the temperature sensor 52 is provided to a calculating block 122. The calculating block 122 calculates from the temperature signal supplied by the temperature sensor 52 and from the known pressure of vapor leaving the outlet 58 of the vaporizing section of the first stage evaporator 32, the concentration of dissolved solids in the intermediate liquid mixture flowing along the line 62.

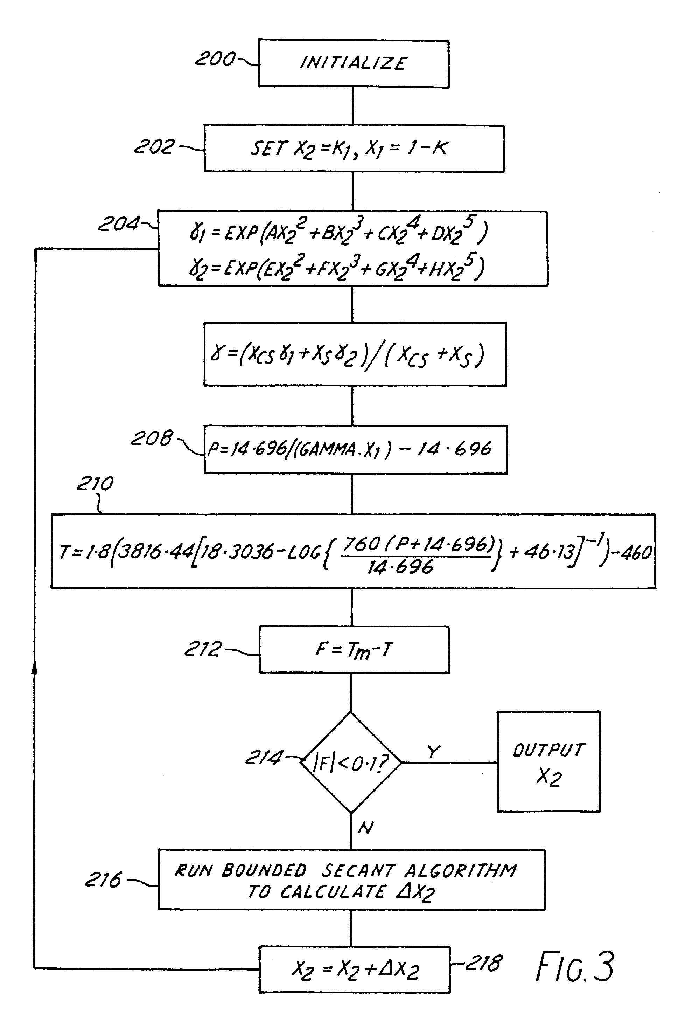

Figure 3 shows schematically the manner in which the calculation block 122 calculates the concentration of sugars (and hence the proportions of sugar and water) in the intermediate liquid mixture from the temperature sensed by the temperature sensor 52. The calculating block 122 comprises a microprocessor programmed to calculate the proportions of sugar and water in the intermediate liquid mixture by an iterative calculation comprising the steps of:

a) estimating the proportion of the sugar in the intermediate liquid mixture;

b) calculating an estimated boiling temperature corresponding to the estimated proportion of the sugar;

c) comparing this estimated temperature with the measured boiling temperature (as measured by the temperature sensor 52) and adjusting the estimated proportion of the sugar in accordance with the difference between the estimated and the measured boiling temperatures; and

d) repeating steps b) and c) until the difference between the estimated boiling temperature and the measured boiling temperature is within a predetermined range.

In this program, step b) is effected by first calculating from the estimated proportion of the sugar an estimated activity of the water admixed with the sugar and thereafter calculating the estimated boiling temperature from this estimated activity. The estimated activity of the water is calculated by expressing it as an exponent of a fifth order polynomial (using the five-suffix Margules equation) of the proportion of the sugar in the intermediate liquid mixture. To allow for the presence of two different sugars (namely sucrose and corn syrup solids) in the sugar component of the intermediate liquid mixture, the program calculates separate estimated water activities, the first estimated activity being calculated as if all the dissolved solids were sucrose and the second estimated activity being calculated as if all the solids were corn syrup solids. Then, the program averages these two estimated activities on a basis weighted to correspond to the molar proportions of dissolved sucrose and corn syrup solids present in the intermediate liquid mixture to produce a final estimated activity from which the estimated temperature is thereafter calculated.

As shown in Figure 3, the program begins with an initialization block such as will be familiar to those skilled in the art of computer programming. Next, at block 202, the proportion of sugar, $X_2$, is set equal to a constant K, which is chosen arbitrarily as equal to the approximate expected proportion of sugar in the intermediate liquid mixture to provide a reasonable starting point for the following iterative calculations. Also at block 202, the proportion of water, $X_1$, in the intermediate liquid feed is set equal to 1-K.

Next, at block 204, activity coefficients $Gamma_1$ and $Gamma_2$ are calculated for the water, based upon sucrose and corn syrup solids respectively using a five-suffix Margules equation, which has the form:

$$\gamma = Exp(AX_2{}^2 + BX_2{}^3 + CX_2{}^4 + DX_2{}^5)$$

It has been found that, to ensure sufficient accuracy in the later calculation, the use of a five-suffix Margules equation is necessary, since three- and four-suffix Margules equations (which lack the last two, and last one, respectively term(s) within the parenthesis) give errors which are significant in commercial production of sugar syrups.

It has been found that, with 42 DE corn syrup solids, the optimum values for the coefficients A, B, C, D, E, F, G and H appearing in block 204 are as follows:

8

A = -8.17247850
B = 30.81127852
C = -10.06762044
D = 3.18560687
E = -8.50413991
F = 27.11105855
G = -32.07124175
H = 15.34543068

After the activity coefficients Gamma₁ and Gamma₂ have been calculated at block 204, the program proceeds, at block 206, to average the activities calculated on a weighted basis to produce an average estimated activity which is used in the subsequent steps. In block 206, $X_{cs}$ and $X_s$ are the number of moles of corn syrup solids and sucrose respectively in the sugar feed solution. It will be apparent to those skilled in the art that if more than two different materials are present in the non-volatile component of the mixture being evaporated, blocks 204 and 206 may be modified to allow for the calculation and averaging of more than two activities.

From block 206, the program proceeds, at block 208, to calculate a saturated steam pressure P from the average estimated activity, Gamma, calculated at block 206. The formula used in block 208 is a standard thermodynamic formula based upon Raoult's Law, and will be familiar to those skilled in the art of thermodynamics.

After calculating the saturated steam pressure at block 208, the program proceeds, at block 210, to calculate an estimated boiling temperature from this saturated steam pressure. The equation in block 210 is the standard Antoine thermodynamic equation, which will be familiar to those skilled in the art, for the calculation of the boiling temperature of water, i.e., the temperature at which water is in equilibrium with steam at any pressure.

After the estimated temperature of the intermediate liquid mixture has been estimated at block 210, the program calculates, at block 212, the temperature difference, F, between the estimated boiling temperature T calculated at block 210 and the measured boiling temperature $T_M$ read from the temperature sensor 52. Then, at block 214, the modulus of the temperature difference F is determined, and if this modulus is less than 0.1 (this figure is chosen arbitrarily and may be varied depending upon the accuracy needed in a particular application) the estimated proportion of sugar, $X_2$, is deemed to be sufficiently close to the actual sugar concentration to be output to the control block 124 (Figure 2). If, however, at block 214 the modulus of F exceeds 0.1, the program proceeds, at block 216, to run a bounded secant algorithm to calculate an appropriate correction $\Delta X_2$ to the estimated proportion $X_2$ of sugar. Appropriate bounded secant algorithms are well known to those skilled in the art and may be found in any textbook on mathematical methods or numerical analysis. Other trial and error search techniques, for example the Newton-Rhapson method, may be used if desired. Finally, at block 218, the program adds $\Delta X_2$ to $X_2$ to provide a new value of $X_2$, and then loops back to block 204 to proceed to calculate the new estimated activities using the new value of $X_2$.

The program just described actually effects the calculations needed to calculate the proportion of water in the intermediate liquid mixture from the boiling temperature. However, if the apparatus shown in Figure 1 is to be used to effect the evaporation of a solution of a mixture containing a substantially constant ratio of sugars and only a limited variation in the proportion of sugar in the solution is to be expected (as will frequently be the case under industrial conditions), the proportion of water can be calculated with sufficient accuracy by storing a limited number of pairs of values of the boiling temperature and corresponding water contents, and linearly intrapolating between adjacent pairs of values to determine the water content corresponding to the measured boiling temperature. For example, it has been found that by storing 11 such pairs of values and linearly intrapolating, the boiling temperatures of sugars solutions containing from 82.5 to 87.2 percent solids and containing approximately equal weights of sucrose and corn syrup solids can be converted to corresponding solids contents with an error of no more than 0.004 percent in the solids content. Such an error is negligible, since it is less than the error in solids content due to the likely error in the boiling temperature measured by commercially-available temperature sensors.

As shown in Figure 2, the calculations block 122 passes a signal representative of the water content of the intermediate liquid mixture to a control block 124. This control block 124 also receives the temperature signal from the temperature sensor 66 and the flow rate reading from the flow sensor 82. The control block 124 performs a heat balance calculation for the second stage of the evaporator and thereby calculates the appropriate steady state mass flow rate of steam required, $m_s$, by the following formula:

$$m_s = (m_f/h_s)[c_p(T_o-T_i) + h_f(1-x_i/x_o)]$$

where: $m_f$ is the product feed rate, i.e., the flow rate of the intermediate liquid mixture measured by the flow sensor 82;

$c_p$ is the average product heat capacity, which for sugar solutions containing approximately 89% sugar is conveniently taken as 0.624;

$T_0$ is the desired product outlet temperature;

$T_i$ is the measured product inlet temperature, as measured by the temperature sensor 66;

$h_s$ is the latent head per unit weight of steam condensed under the conditions in the heating section of the second stage of the evaporator; for a heating section operating at 5,45 bar (78 psig.) $h_s$ is conveniently taken at 2083,6 j/t (895.8 BTU/lb.);

$h_f$ is the heat of vaporization of moisture from the product, and for sugar solutions may be assumed to be 2220 j/t (954.45 BTU/lb.);

$x_i$ is the solids mass fraction in the intermediate liquid mixture fed to the second stage evaporator; and

$x_0$ is the desired solids mass fraction in the final product

Once a steady state steam flow has been calculated by the control block 124, which steady state steam flow differs from that previously being used, the steam flow to the heating section 88 should not be changed immediately, at least in industrial-sized apparatus, in which the residence time in the second stage is significant (typically about 3 to 4 minutes). If, for example, the steam flow needs to be adjusted because the temperature sensed by the sensor 66 drops, immediately after the change in temperature is sensed by the sensor 66 the second stage will still be full of good product, and an immediate change in steam flow would spoil this material. It can be shown mathematically that, under these conditions, an immediate increase in steam flow in response to the drop in inlet temperature will first cause the final liquid mixture to become too concentrated in sugar and then gradually to return to the correct concentration. If, however, adjustment of steam flow is deferred until all the good material has left the second stage, then some final product which is significantly too dilute will be produced, and the control effected will resemble that achieved by conventional feedback control systems. Accordingly, the control of the steam flow to the heating section 88 must be adjusted dynamically so that the steam flow begins to be changed while good material is still present in the second stage but while this material does not have sufficient residence time remaining to respond significally to the adjustment in steam flow rate. The control action must then overcompensate for the "bad" material already in the heating section 88, and for the lag required to overcome the thermal momentum of the system, so that the "bad" material will reach the proper temperature (and hence concentration) during its remaining residence time in the second stage. The necessary control action can be accomplished using a dead time lag and then a lead action compensation. Electronic modules for providing appropriate dead time lags and lead action compensations are available "off-the-shelf" for some evaporator control systems, e.g., the Foxboro SPEC 200 controller.

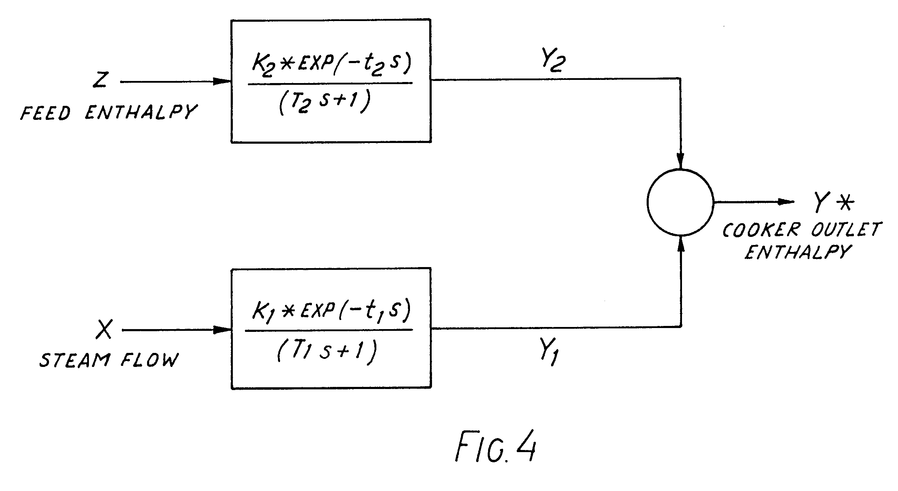

Figure 4 of the accompanying drawings shows schematically the dependence of the enthalpy deviation (Y*) of the final liquid mixture on the enthalpy deviation (Z) of the intermediate liquid mixer entering the heating section 88 and on the steam flow deviation (X) to the heating section 88, where in each case "deviation" means the difference between the actual and the steady-state values. The process transfer functions are shown in the Laplace domain rather than as differential equations representing the rate of change with respect to time of the temperature at the outlet of the second stage, since the use of Laplace transforms enables the differential equations to be solved algebraically.

The constants $K_1$, $K_2$, $t_1$, $t_2$, $T_1$ and $T_2$ can be determined empirically by operating the second stage of the evaporator under steady-state conditions, switching off the automatic control, then manually initiating a step change (large enough to be easily measured) in the steam flow rate or the enthalpy of the intermediate liquid mixture, and recording the final mixture outlet temperature as a function of time. Analysis of the resultant temperature/time curves enables the constants to be calculated by methods well known to those skilled in the art.

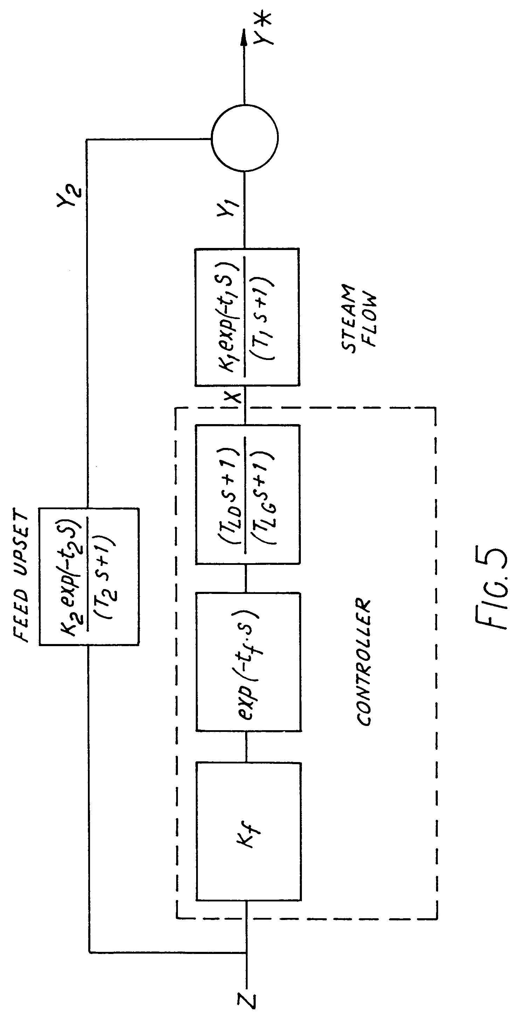

Once these constants have been evaluated, the heat balance equations can be solved to provide the required feedforward dynamic compensation. Figure 5 shows the steps carried out by the calculating and delay assembly 68. The objective is that, under any set of circumstances Y* must be zero, which requires:

$$z \left[ K_f \right] \left[ \exp\left(-t_f s\right) \right] \left[ \frac{T_{LD}\, s + 1}{T_{LC}\, s + 1} \right] \left[ \frac{K_1\, \exp\left(-t_1 s\right)}{T_1\, s + 1} \right]$$

$$= z \left[ \frac{K_2\, \exp\left(-t_2\, s\right)}{T_2\, s + 1} \right]$$

The expression $(T_{LD}\, s + 1)(T_{LG}\, s + 1)$ is the lead-lag expression for the apparatus with $T_{LD}$ being the amount of lead action and $T_{LG}$ the amount of lag action. As already noted, modules for providing appropriate values of these parameters are available commercially. The function $\exp(-t_f s)$ is a pure dead time delay, while $K_f$ represents the conversion of changes in the enthalpy of the intermediate liquid mixture to changes in stream flow, and is calculated by the control block 124, as already described.

By separating the feedforward response the above equation can be written:

$$\left[ K_f \right] \left[ \exp\left(-t_f s\right) \right] \left[ \frac{T_{LD}\, s + 1}{T_{LC}\, s + 1} \right]$$

$$= \left[ \frac{T_1\, s + 1}{T_2\, s + 1} \right] \left[ \frac{K_2\, \exp\left(-t_2 s\right)}{K_1\, \exp\left(-t_1 s\right)} \right]$$

Further algebraic simplification yields the following equation.

$$\left[\begin{array}{c} K_f \end{array}\right] \left[\begin{array}{c} \exp \quad -t_f s \end{array}\right] \left[\begin{array}{c} \dfrac{T_{LD}\ s + 1}{T_{LC}\ s + 1} \end{array}\right] =$$

$$\left(\dfrac{K_2}{K_1}\right) \left[\begin{array}{c} \exp\ (t_1 - t_2)\ s \end{array}\right] \left[\begin{array}{c} \dfrac{T_1\ s + 1}{T_2\ s + 1} \end{array}\right] \qquad (A)$$

Equation (A) also shows that

$$K_f = K_2/K_1,$$

which would indicate that $K_f$ would be constant during operation. However, when (as in most commercial two-stage evaporators) boiling occurs in the heating coil of the heating section 76, $K_1$ and $K_2$ vary significantly with operating conditions. Accordingly, rather than attempting to use constant values of $K_1$ and $K_2$, $K_f$ is calculated directly in the manner already described. The values of the other constants are much less dependent on process conditions and no serious error is introduced by treating them as true constants, since they are based upon material thermal capacitance, which does not change significantly within the temperature range over which any two-stage evaporator would normally be employed for the evaporation of a specific solution.

Because $K_f$ is dependent upon the rate of flow of the solution through the apparatus, the entire procedure described above for determination of the control constants must be repeated for each new rate of flow which it is desired to be used.

As already mentioned, the calculation of $K_f$ shown in Figure 5 is carried out by the control block 124 shown in Figure 2. The calculation of the deadtime shown in Figure 5 is carried out by a delay block 126 shown in Figure 2, while the leadlag factor

$$(T_{LD}s + 1)/(T_{LG}s + 1)$$

is set as already described. The calculation of the steam flow response factor shown in Figure 5 is carried out by a calculating block 128 shown in Figure 2 which thus produces a signal representing $Y_1$. The response to feed upset factor shown in Figure 5 is calculated by a calculating block 130 shown in Figure 2, which thus produces a signal representative of $Y_2$. Finally, the summing of the signals representing $Y_1$ and $Y_2$ is effected by a summing block 132 shown in Figure 2. This summing block sends a signal along a line 134 (Figure 1) to control the operation of the steam flow controller 94.

It will readily be apparent to those skilled in the art that numerous changes and modifications can be made in the specific process and apparatus described above without departing from the scope of the invention. For example, although the specific process and apparatus described above relate to the evaporation of an aqueous sugar solution, the process and apparatus of the invention may be used in the evaporation of other aqueous solutions, for example aqueous salt solutions. The process and apparatus of the invention are not restricted to aqueous solutions or to solutions of solids in liquids. For example, the process and apparatus of the invention may be used to separate homogenous mixtures of two liquids provided that the volatilities of the two liquids differ sufficiently that substantial changes in the composition of a mixture can be effected by boiling the mixture. Also, although the process and apparatus of the invention have been illustrated with a two-stage evaporator, they can be used with evaporators having more than two stages.

## Claims

1. A process for controlling the composition of a liquid mixture, said process comprising:

   effecting a first heating of a feed mixture, said feed mixture comprising a first, substantially non-volatile, component and a second component which is a single material more volatile than said first component;

   permitting boiling of the heated feed mixture under a known pressure, thereby producing a first vapor and an intermediate liquid mixture comprising a solution of said first component;

   measuring the temperature at which said boiling occurs;

   calculating from the measured boiling temperature the proportions of said first and second components in said intermediate liquid mixture;

   effecting a second heating of said intermediate liquid mixture, and permitting boiling thereof, thereby producing a second vapor and a final liquid mixture; and

   controlling the heat input to said intermediate liquid mixture in response to the calculated proportions of said first and second components therein, thereby producing said final liquid mixture having substantially a predetermined composition.

2. A process according to Claim 1 wherein said first component is a solid at 20°C and said second component is a liquid at 20°C.

3. A process according Claim 2 wherein said first component comprises a sugar and said second component comprises water.

4. A process according to Claim 3 wherein said first component comprises sucrose.

5. A process according to Claim 4 wherein said first component further comprises corn syrup solids.

6. A process according to any preceding claim wherein said known pressure is substantially atmospheric pressure.

7. A process according to any preceding claim wherein said calculation of said proportions of said first and second components in said intermediate liquid mixture is effected by an iterative calculation comprising the steps of:

   a) estimating the proportion of said first component in said intermediate liquid mixture;

   b) calculating an estimated temperature of said intermediate liquid mixture corresponding to said estimated proportion of said first component;

   c) comparing said estimated temperature with the measured temperature of said intermediate liquid mixture, and adjusting said estimated proportion of said first component in accordance with the difference between said estimated and said measured temperature; and

   d) repeating steps b) and c) until the difference between said estimated temperature and said measured temperature is within a predetermined range.

8. A process according to Claim 7 wherein step b) is effected by first calculating, from said estimated proportion of said first component, an estimated activity of said second component and thereafter calculating said estimated temperature from said estimated activity.

9. A process according to Claim 8 wherein said estimated activity is calculated from said estimated proportion of said first component in said intermediate liquid mixture by means of an equation of the form

   $$\gamma = \text{Exp}[AX^2 + BX^3 + CX^4 + DX^5]$$

   where $\gamma$ is said estimated activity of the second component, X is said estimated proportion of said first component and A,B,C, and D are constants.

10. A process according to Claim 8 wherein said first component comprises two different materials, separate estimated activities for said second component are calculated from the proportions of each of said two different materials, and the two estimated activities are then averaged on a weighted basis to

EP 0 244 079 B1

produce a final estimated activity, which is thereafter used to calculate said estimated temperature.

11. A process according to Claim 10 wherein said two different materials comprise sucrose and corn syrup solids.

12. A process according to Claim 7 wherein a plurality of pairs of values of boiling temperatures and corresponding compositions of the intermediate liquid mixture are stored and the composition of the intermediate liquid mixture is determined from the measured boiling temperature by linear intropolation between the stored values.

13. A process according to any preceding claim wherein heat is supplied to said intermediate liquid mixture by heat exchange between said intermediate liquid mixture and a hot fluid, and the control of said heat input to said intermediate liquid mixture is effected by controlling the supply of said hot fluid effecting said heat exchange.

14. A process according to Claim 12 wherein said hot fluid is steam.

15. A process according to any preceding claim further comprising measuring the temperature of said final liquid mixture while it is still substantially in equilibrium with its own vapor under a known pressure, and calculating from the measured temperature of said final liquid mixture the proportions of said first and second components therein.

16. Apparatus for the production of a liquid mixture having substantially a predetermined composition, said apparatus comprising:

supply means for supplying a feed mixture, said feed mixture comprising a first, substantially non-volatile, component and a second component which is a single material more volatile than the first component;

a first evaporator having an inlet arranged to receive said feed mixture from said supply means, an outlet for a first vapor and an outlet for an intermediate liquid mixture;

first heating means for supplying heat to said first evaporator and thereby causing boiling of said second component from said feed mixture to produce said first vapor and said intermediate liquid mixture, wherein said intermediate mixture comprises a solution of said first component;

a temperature sensor arranged to measure the temperature at which said boiling occurs;

calculating means for calculating from the measured boiling temperature the proportions of said first and second components in the intermediate liquid mixture;

a second evaporator having an inlet for receiving said intermediate liquid mixture from said first evaporator, an outlet for a second vapor and an outlet for a final liquid mixture; and

variable second heating means for supplying heat to said second evaporator, and thereby causing boiling of said second component from said feed mixture to produce said second vapor and said final liquid mixture, the rate of heat supply by said variable second heating means being controllable by said calculating means in response to said calculated proportions of said first and second components so as to produce substantially a predetermined composition in said final liquid mixture.

17. An apparatus according to Claim 16 wherein said first evaporator is arranged to evaporate said first vapor under substantially atmospheric pressure.

18. An apparatus according to Claim 16 or 17 wherein said temperature sensor is disposed in a line leading from said first evaporator to said second evaporator.

19. An apparatus according to Claim 16, 17 or 18 wherein said calculating means is programmed to calculate said proportions of said first and second components in said intermediate liquid mixture by an iterative calculation comprising the steps of:

a) estimating the proportion of said first component in said intermediate liquid mixture;

b) calculating an estimated temperature of said intermediate liquid mixture corresponding to said estimated proportion of said first component;

c) comparing said estimated temperature with the measured temperature of said intermediate liquid mixture, and adjusting said estimated proportion of said first component in accordance with the difference between said estimated and said measured temperature; and

14

d) repeating steps b) and c) until the difference between said estimated temperature and said measured temperature is within a predetermined range.

20. An apparatus according to Claim 17 wherein said calculating means is programmed to effect step b) by first calculating from said estimated proportion of said first component an estimated activity of said second component and thereafter calculating said estimated temperature from said estimated activity.

21. An apparatus according to Claim 20 wherein said calculating means is programmed to calculate said estimated activity from said estimated proportion of said first component in said intermediate liquid mixture by means of an equation of the form

$$\gamma = \text{Exp}[AX^2 + BX^3 + CX^4 + DX^5]$$

where $\gamma$ is said estimated activity of the second component, X is said estimated proporation of said first component and A, B, C, and D are constants.

22. An apparatus according to Claim 20 wherein, to allow for the presence of two different materials in said first component, said calculating means is programmed to calculate separate estimated activities for said second component for each of two different materials and then to average these two estimated activities on a weighted basis to produce a final estimated activity, and thereafter to calculate said estimated temperature from said final estimated activity.

23. An apparatus according to any one of Claims 16-22 wherein said variable second heating means comprises means for supplying a hot fluid to said second evaporator, said second evaporator being arranged to permit heat exchange between said hot fluid and said intermediate liquid mixture, and control of said rate of heat supply by said variable second heating means is effected by controlling the supply of said hot fluid to said second evaporator.

24. An apparatus according to any one of Claims 16-22 further comprising an auxiliary temperature sensor arranged to measure the temperature of the final liquid mixture while it is still substantially in equilibrium with its own vapor and auxiliary calculating means for calculating, from the temperature measured by said auxiliary temperature sensor, the proportions of said first and second components in said final liquid mixture.

25. An apparatus according to any one of Claims 16-22 wherein said second evaporator comprises a heating section, in which is formed said inlet and in which heat can be supplied to said intermediate liquid mixture, a vaporizing section, in which are disposed said outlets for said second vapor and said final liquid mixture and in which said intermediate liquid mixture can boil, and a line connecting said heating section to said vaporizing section, said apparatus having a temperature sensor arranged to measure the temperature of said intermediate liquid mixture passing along said line and to send a signal representative of said temperature to said calculating means.

26. An apparatus according to Claim 25 wherein said second evaporator further comprises a vacuum section arranged to receive the final liquid mixture leaving the outlet of said vaporizing section and to apply a sub-atmospheric pressure to said final liquid mixture, thereby causing further evaporation of said second component from said final liquid mixture.

27. An apparatus according to Claim 26 wherein said vacuum section is provided with a vacuum section temperature sensor arranged to measure the temperature of the final liquid mixture leaving the vacuum section and to generate a temperature signal representative of said temperature, a pressure regulator arranged to maintain the sub-atmospheric pressure in said vacuum section substantially constant and to generate a pressure signal representative of said subatmospheric pressure, and a vacuum section calculating means arranged to receive said temperature and pressure signals and to calculate the composition of said final liquid mixture leaving said vacuum section.

28. An apparatus according to any one of Claims 16-27 further comprising a flow sensor arranged to measure the rate of flow of said intermediate liquid mixture into said inlet of said second evaporator and to send a signal representative of said flow rate to said calculating means.

**Patentansprüche**

1. Verfahren zur Steuerung der Zusammensetzung einer flüssigen Mischung, welches umfaßt:
   Vornahme eines ersten Erhitzens einer Zufuhrmischung, welche Zufuhrmischung eine erste, im wesentlichen nicht-flüchtige Komponente und eine zweite Komponente enthält, die ein Einzelmaterial ist, welches flüchtiger ist als die erste Komponente;
   Zulassen des Siedens der erhitzten Zufuhrmischung bei einem bekannten Druck, wodurch ein erster Dampf und eine flüssige Zwischenmischung mit einer Lösung der ersten Komponente hergestellt wird;
   Messen der Temperatur, bei der das Sieden auftritt;
   Berechnen der Anteile der ersten und der zweiten Komponente in der flüssigen Zwischenmischung aus der gemessenen Siedetemperatur;
   Durchführen eines zweiten Erhitzens der flüssigen Zwischenmischung und Zulassen ihres Siedens, wodurch ein zweiter Dampf und eine flüssige Endmischung erzeugt werden; und
   Steuern der Wärmezufuhr zur flüssigen Zwischenmischung in Abhängigkeit von den berechneten Anteilen der ersten und der zweiten Komponente darin, wodurch die flüssige Endmischung mit einer im wesentlichen vorgegebenen Zusammensetzung erzeugt wird.

2. Verfahren nach Anspruch 1, bei welchem die erste Komponente bei 20°C ein Festkörper und die zweite Komponente bei 20°C eine Flüssigkeit ist.

3. Verfahren nach Anspruch 2, bei welchem die erste Komponente einen Zucker und die zweite Komponente Wasser enthält.

4. Verfahren nach Anspruch 3, bei welchem die erste Komponente Saccharose enthält.

5. Verfahren nach Anspruch 4, bei welchem die erste Komponente weiters Getreidesirup-Feststoffe enthält.

6. Verfahren nach einem der vorhergehenden Ansprüche, bei welchem der bekannte Druck im wesentlichen atmosphärischer Druck ist.

7. Verfahren nach einem der vorhergehenden Ansprüche, bei welchem die Berechnung der Anteile der ersten und der zweiten Komponente in der flüssigen Zwischenmischung durch eine iterative Berechnung ausgeführt wird, welche die Schritte umfaßt:
   a) Schätzen des Anteiles der ersten Komponente in der flüssigen Zwischenmischung;
   b) Berechnen einer geschätzten Temperatur der flüssigen Zwischenmischung, welche dem geschätzten Anteil der ersten Komponente entspricht;
   c) Vergleichen der geschätzten Temperatur mit der gemessenen Temperatur der flüssigen Zwischenmischung und Feineinstellen des geschätzten Anteiles der ersten Komponente entsprechend der Differenz zwischen der geschätzten und der gemessenen Temperatur; und
   d) Wiederholen der Schritte b) und c), bis die Differenz zwischen der geschätzten Temperatur und der gemessenen Temperatur innerhalb eines vorgegebenen Bereiches liegt.

8. Verfahren nach Anspruch 7, bei welchem Schritt b) durchgeführt wird, indem zunächst aus dem geschätzten Anteil der ersten Komponente eine geschätzte Aktivität der zweiten Komponente berechnet wird und anschließend die geschätzte Temperatur aus der geschätzten Aktivität berechnet wird.

9. Verfahren nach Anspruch 8, bei welchem die geschätzte Aktivität aus dem geschätzten Anteil der ersten Komponente in der flüssigen Zwischenmischung mit Hilfe einer Gleichung der Form

$$\gamma = \mathrm{Exp}[AX^2 + BX^3 + CX^4 + DX^5]$$

berechnet wird, wobei $\gamma$ die geschätzte Aktivität der zweiten Komponente, X der geschätzte Anteil der ersten Komponente und A, B, C und D Konstanten sind.

10. Verfahren nach Anspruch 8, bei welchem die erste Komponente zwei verschiedene Materialien enthält, getrennte geschätzte Aktivitäten für die zweite Komponente aus den Anteilen jedes der beiden

16

verschiedenen Materialien berechnet werden und die beiden geschätzten Aktivitäten dann auf einer gewichteten Basis gemittelt werden, um eine endgültige geschätzte Aktivität zu bilden, die anschließend verwendet wird, um die geschätzte Temperatur zu berechnen.

11. Verfahren nach Anspruch 10, bei welchem die beiden verschiedenen Materialien Saccharose und Getreidesirup-Feststoffe umfassen.

12. Verfahren nach Anspruch 7, bei welchem mehrere Wertepaare von Siedetemperaturen und zugehörigen Zusammensetzungen der flüssigen Zwischenmischung gespeichert werden und die Zusammensetzung der flüssigen Zwischenmischung aus der gemessenen Siedetemperatur durch lineare Interpolation zwischen den gespeicherten Werten bestimmt wird.

13. Verfahren nach einem der vorhergehenden Ansprüche, bei welchem der flüssigen Zwischenmischung durch Wärmeaustausch zwischen der flüssigen Zwischenmischung und einem heißen Fluid Wärme zugeführt wird, und die Steuerung dieser Wärmezufuhr zur flüssigen Zwischenmischung durch Steuerung der Zufuhr dieses heißen Fluids, welches den Wärmeaustausch bewirkt, bewirkt wird.

14. Verfahren nach Anspruch 12, bei welchem das heiße Fluid Wasserdampf ist.

15. Verfahren nach einem der vorhergehenden Ansprüche, ferner mit dem Schritt Messen der Temperatur der flüssigen Endmischung, während sie noch im wesentlichen im Gleichgewicht mit ihrem eigenen Dampf bei einem bekannten Druck ist, und Berechnen der Anteile der ersten und zweiten Komponente der flüssigen Endmischung aus ihrer gemessenen Temperatur.

16. Vorrichtung zum Herstellen einer flüssigen Mischung mit einer im wesentlichen vorgegebenen Zusammensetzung, welche Vorrichtung umfaßt:

Zuführmittel zum Zuführen einer Zufuhrmischung, welche Zufuhrmischung eine erste, im wesentlichen nicht-flüchtige Komponente und eine zweite Komponente enthält, die ein Einzelmaterial ist, welches flüchtiger ist als die erste Komponente;

einen ersten Verdampfer mit einem Einlaß zur Aufnahme der Zufuhrmischung aus den Zufuhrmitteln, einem Auslaß für einen ersten Dampf und einem Auslaß für eine flüssige Zwischenmischung;

erste Erhitzungsmittel zum Zuführen von Wärme zum ersten Verdampfer, um dadurch das Sieden der zweiten Komponente aus der Zufuhrmischung zu bewirken und dadurch den ersten Dampf und die flüssige Zwischenmischung herzustellen, wobei diese Zwischenmischung eine Lösung der ersten Komponente enthält;

einen Temperaturfühler zum Messen der Temperatur, bei der das Sieden auftritt;

Berechnungsmittel zum Berechnen der Anteile der ersten und der zweiten Komponente in der flüssigen Zwischenmischung aus der gemessenen Siedetemperatur;

einen zweiten Verdampfer mit einem Einlaß zur Aufnahme der flüssigen Zwischenmischung aus dem ersten Verdampfer, einem Auslaß für einen zweiten Dampf und einem Auslaß für eine flüssige Endmischung; und

variable zweite Erhitzungsmittel zum Zuführen von Wärme zum zweiten Verdampfer, um dadurch das Sieden der zweiten Komponente aus der Zufuhrmischung zu bewirken und dadurch den zweiten Dampf und die flüssige Endmischung herzustellen, wobei das Ausmaß der Wärmezufuhr von den variablen zweiten Erhitzungsmitteln durch die Berechnungsmittel in Abhängigkeit von den berechneten Anteilen der ersten und der zweiten Komponente so steuerbar ist, daß eine im wesentlichen vorgegebene Zusammensetzung in der flüssigen Endmischung erzeugt wird.

17. Vorrichtung nach Anspruch 16, bei welcher der erste Verdampfer zum Verdampfen des ersten Dampfes unter im wesentlichen atmosphärischem Druck ausgebildet ist.

18. Vorrichtung nach Anspruch 16 oder 17, bei welcher der Temperaturfühler in einer Leitung angeordnet ist, die vom ersten Verdampfer zum zweiten Verdampfer führt.

19. Vorrichtung nach Anspruch 16, 17 oder 18, bei welcher die Berechnungsmittel zur Berechnung der Anteile der ersten und der zweiten Komponente in der flüssigen Zwischenmischung mittels einer iterativen Berechnung programmiert sind, welche die Schritte umfaßt:

a) Schätzen des Anteiles der ersten Komponente in der flüssigen Zwischenmischung;

b) Berechnen einer geschätzten Temperatur der flüssigen Zwischenmischung, welche dem geschätzten Anteil der ersten Komponente entspricht;

c) Vergleichen der geschätzten Temperatur mit der gemessenen Temperatur der flüssigen Zwischenmischung und Feineinstellen des geschätzten Anteiles der ersten Komponente entsprechend der Differenz zwischen der geschätzten und der gemessenen Temperatur; und

d) Wiederholen der Schritte b) und c), bis die Differenz zwischen der geschätzten Temperatur und der gemessenen Temperatur innerhalb eines vorgegebenen Bereiches liegt.

20. Vorrichtung nach Anspruch 17, bei welcher die Berechnungsmittel zur Durchführung des Schrittes b) so programmiert sind, daß zunächst eine geschätzte Aktivität der zweiten Komponente aus dem geschätzten Anteil der ersten Komponente berechnet wird und anschließend die geschätzte Temperatur aus der geschätzten Aktivität berechnet wird.

21. Vorrichtung nach Anspruch 20, bei welcher die Berechnungsmittel zum Berechnen der geschätzten Aktivität aus dem geschätzten Anteil der ersten Komponente in der flüssigen Zwischenmischung mit Hilfe einer Gleichung der Form

$$\gamma = Exp[AX^2 + BX^3 + CX^4 + DX^5]$$

programmiert sind, wobei $\gamma$ die geschätzte Aktivität der zweiten Komponente, X der geschätzte Anteil der ersten Komponente und A, B, C und D Konstanten sind.

22. Vorrichtung nach Anspruch 20, bei welcher die Berechnungsmittel, um das Vorliegen zweier verschiedener Materialien in der ersten Komponente zu ermöglichen, zur Berechnung getrennter geschätzter Aktivitäten der zweiten Komponente für jedes der beiden verschiedenen Materialien und dann zum Mitteln dieser beiden geschätzten Aktivitäten auf einer gewichteten Basis, um eine endgültige geschätzte Aktivität zu bilden, und anschließend zum Berechnen der geschätzten Temperatur aus der endgültigen geschätzten Aktivität programmiert sind.

23. Vorrichtung nach einem der Ansprüche 16 bis 22, bei welcher die variablen zweiten Erhitzungsmittel Mittel zum Zuführen eines heißen Fluids zum zweiten Verdampfer umfassen, wobei der zweite Verdampfer so ausgebildet ist, daß er einen Wärmeaustausch zwischen dem heißen Fluid und der flüssigen Zwischenmischung gestattet, und wobei die Steuerung des Ausmaßes der Wärmezufuhr von den variablen zweiten Erhitzungsmitteln durch Steuerung der Zufuhr des heißen Fluids zum zweiten Verdampfer bewirkt wird.

24. Vorrichtung nach einem der Ansprüche 16 bis 22, weiters mit einem Hilfs-Temperaturfühler zum Messen der Temperatur der flüssigen Endmischung, während sie noch im wesentlichen im Gleichgewicht mit ihrem eigenen Dampf ist, und mit Hilfs-Berechnungsmitteln zum Berechnen der Anteile der ersten und der zweiten Komponente in der flüssigen Endmischung aus der vom Hilfs-Temperaturfühler gemessenen Temperatur.

25. Vorrichtung nach einem der Ansprüche 16 bis 22, bei welcher der zweite Verdampfer einen Erhitzungsabschnitt, in dem der Einlaß ausgebildet ist und in den der flüssigen Zwischenmischung Wärme zugeführt werden kann, einen Verdampferabschnitt, in welchem die Auslässe für den zweiten Dampf und die flüssige Endmischung liegen und in dem die flüssige Zwischenmischung sieden kann, und eine Leitung aufweist, welche den Erhitzungsabschnitt mit dem Verdampferabschnitt verbindet, wobei die Vorrichtung einen Temperaturfühler zum Messen der Temperatur der flüssigen Zwischenmischung hat, welche durch diese Leitung strömt, um ein für diese Temperatur kennzeichnendes Signal an die Berechnungsmittel abzugeben.

26. Vorrichtung nach Anspruch 25, bei welcher der zweite verdampfer weiters einen Vakuumbereich aufweist, der zur Aufnahme der flüssigen Endmischung, die den Auslaß des Verdampferabschnittes verläßt, und zum Anlegen eines unter-atmosphärischen Druckes an diese flüssige Endmischung vorgesehen ist, wodurch eine weitere Verdampfung der zweiten Komponente aus der flüssigen Endmischung bewirkt wird.

27. Vorrichtung nach Anspruch 26, bei welcher der Vakuumabschnitt mit einem Vakuumabschnitt-Temperaturfühler zum Messen der Temperatur der den Vakuumbereich verlassenden flüssigen Endmischung und zum Erzeugen eines für diese Temperatur kennzeichnenden Temperatursignales, ferner mit einem Druckregler, um den unter-atmosphärischen Druck im Vakuumbereich im wesentlichen konstant zu halten und um ein für diesen unter-atmosphärischen Druck kennzeichnendes Drucksignal zu erzeugen, und mit Vakuumbereich-Berechnungsmitteln zum Empfang des Temperatur- und Drucksignales und zur Berechnung der Zusammensetzung der den Vakuumbereich verlassenden flüssigen Endmischung versehen ist.

28. Vorrichtung nach einem der Ansprüche 16 bis 27, weiters mit einem Strömungsfühler zum Messen des Einströmens der flüssigen Zwischenmischung in den Einlaß des zweiten Verdampfers und zur Abgabe eines für dieses Einströmen kennzeichnenden Signales an die Berechnungsmittel.

**Revendications**

1. Procédé pour ajuster la composition d'un mélange liquide, ledit procédé consistant :
   à effectuer un premier chauffage d'un mélange d'alimentation, ledit mélange d'alimentation comprenant un premier constituant, sensiblement non volatil, et un second constituant qui est une matière unique plus volatile que ledit premier constituant ;
   à permettre une ébullition du mélange d'alimentation chauffé sous une pression connue, afin de produire une première vapeur et un mélange liquide intermédiaire comprenant une solution dudit premier constituant ;
   à mesurer la température à laquelle ladite ébullition se produit ;
   à calculer à partir de la température d'ébullition mesurée les proportions desdits premier et second constituants dans ledit mélange liquide intermédiaire ;
   à effectuer un second chauffage dudit mélange liquide intermédiaire et à permettre son ébullition afin de produire une seconde vapeur et un mélange liquide final ; et
   à ajuster l'apport de chaleur audit mélange liquide intermédiaire en réponse aux proportions calculées desdits premier et second constituants qu'il contient, afin de produire ledit mélange liquide final ayant sensiblement une composition prédéterminée.

2. Procédé selon la revendication 1, dans lequel ledit premier constituant est un solide à 20°C et ledit second constituant est un liquide à 20°C.

3. Procédé selon la revendication 2, dans lequel ledit premier constituant comprend un sucre et ledit second constituant comprend de l'eau.

4. Procédé selon la revendication 3, dans lequel ledit premier constituant comprend du saccharose.

5. Procédé selon la revendication 4, dans lequel ledit premier constituant comprend en outre des matières solides de sirop de maïs.

6. Procédé selon l'une quelconque des revendications précédentes, dans lequel ladite pression connue est sensiblement la pression atmosphérique.

7. Procédé selon l'une quelconque des revendications précédentes, dans lequel le calcul desdites proportions desdits premier et second constituants dans ledit mélange liquide intermédiaire est effectué par un calcul itératif comprenant les étapes qui consistent :
   a) à estimer la proportion du premier constituant dans ledit mélange liquide intermédiaire ;
   b) à calculer une température estimée dudit mélange liquide intermédiaire correspondant à ladite proportion estimée dudit premier constituant ;
   c) à comparer ladite température estimée à la température mesurée dudit mélange liquide intermédiaire, et à régler ladite proportion estimée dudit premier constituant conformément à la différence entre ladite température estimée et ladite température mesurée ; et
   d) à répéter les étapes b) et c) jusqu'à ce que la différence entre ladite température estimée et ladite température mesurée soit à l'intérieur d'une plage prédéterminée.

8. Procédé selon la revendication 7, dans lequel l'étape b) est effectuée par calcul, d'abord, à partir de ladite proportion estimée dudit premier constituant, d'une activité estimée dudit second constituant et

19

calcul, ensuite, de ladite température estimée à partir de ladite activité estimée.

9. Procédé selon la revendication 8, dans lequel ladite activité estimée est calculée à partir de ladite proportion estimée dudit premier constituant dans ledit mélange liquide intermédiaire au moyen d'une équation de la forme

$$\gamma = Exp[AX^2 + BX^3 + CX^4 + DX^5]$$

où $\gamma$ est ladite activité estimée du second constituant, X est ladite proportion estimée dudit premier constituant et A, B, C et D sont des constantes.

10. Procédé selon la revendication 8, dans lequel ledit premier constituant comprend deux matières différentes, on calcule des activités estimées séparées pour ledit second constituant à partir des proportions de chacune desdites deux matières différentes, et on établit ensuite la moyenne des deux activités estimées sur une base pondérée pour produire une activité estimée finale qui est ensuite utilisée pour calculer ladite température estimée.

11. Procédé selon la revendication 10, dans lequel lesdites deux matières différentes comprennent du saccharose et des matières solides de sirop de maïs.

12. Procédé selon la revendication 7, dans lequel un nombre de paires de valeurs de température d'ébullition et de compositions correspondantes du mélange liquide intermédiaire sont mémorisés, et la composition du mélange liquide intermédiaire est déterminée à partir de la température d'ébullition mesurée par intrapolation linéaire entre les valeurs mémorisées.

13. Procédé selon l'une quelconque des revendications précédentes, dans lequel de la chaleur est fournie audit mélange liquide intermédiaire par échange de chaleur entre ledit mélange liquide intermédiaire et un fluide chaud, et l'ajustement dudit apport de chaleur audit mélange liquide intermédiaire est effectué par ajustement de l'amenée dudit fluide chaud effectuant ledit échange de chaleur.

14. Procédé selon la revendication 12, dans lequel ledit fluide chaud est de la vapeur d'eau.

15. Procédé selon l'une quelconque des revendications précédentes, consistant en outre à mesurer la température dudit mélange liquide final pendant qu'il est encore sensiblement en équilibre avec sa propre vapeur sous une pression connue, et à calculer à partir de la température mesurée dudit mélange liquide final les proportions desdits premier et second constituants qu'il renferme.

16. Appareil pour la production d'un mélange liquide ayant sensiblement une composition prédéterminée, ledit appareil comportant :

des moyens d'amenée destinés à amener un mélange d'alimentation, ledit mélange d'alimentation comprenant un premier constituant sensiblement non volatil et un second constituant qui est une matière unique plus volatile que le premier constituant ;

un premier évaporateur ayant une entrée disposée de façon à recevoir ledit mélange d'alimentation provenant desdits moyens d'amenée, une sortie pour une première vapeur et une sortie pour un mélange liquide intermédiaire ;

des premiers moyens chauffants destinés à fournir de la chaleur audit premier évaporateur et à provoquer ainsi une ébullition dudit second constituant à partir dudit mélange d'alimentation pour produire ladite première vapeur et ledit mélange liquide intermédiaire, dans lequel ledit mélange intermédiaire comprend une solution dudit premier constituant ;

un capteur de température disposé de façon à mesurer la température à laquelle ladite ébullition se produit ;

des moyens de calcul destinés à calculer, à partir de la température mesurée d'ébullition, les proportions desdits premier et second constituants dans le mélange liquide intermédiaire ;

un second évaporateur ayant une entrée destinée à recevoir ledit mélange liquide intermédiaire provenant dudit premier évaporateur, une sortie pour une seconde vapeur et une sortie pour un mélange liquide final ; et

des seconds moyens chauffants variables destinés à fournir de la chaleur audit second évaporateur et à provoquer ainsi une ébullition dudit second constituant provenant dudit mélange d'alimentation

20

pour produire ladite seconde vapeur et ledit mélange liquide final, le débit d'apport de chaleur par lesdits seconds moyens chauffants variables pouvant être ajusté par lesdits moyens de calcul en réponse auxdites proportions calculées desdits premier et second constituants afin de produire sensiblement une composition prédéterminée dans ledit mélange liquide final.

17. Appareil selon la revendication 16, dans lequel ledit premier évaporateur est disposé de façon à évaporer lesdites premières vapeurs sous une pression sensiblement atmosphérique.

18. Appareil selon la revendication 16 ou 17, dans lequel ledit capteur de température est disposé dans une conduite menant dudit premier évaporateur audit second évaporateur.

19. Appareil selon la revendication 16, 17 ou 18, dans lequel lesdits moyens de calcul sont programmés de façon à calculer lesdites proportions desdits premier et second constituants dans ledit mélange liquide intermédiaire par un calcul itératif comprenant les étapes qui consistent :
   a) à estimer la proportion dudit premier constituant dans ledit mélange liquide intermédiaire ;
   b) à calculer une température estimée dudit mélange liquide intermédiaire correspondant à ladite proportion estimée dudit premier constituant ;
   c) à comparer ladite température estimée à la température mesurée dudit mélange liquide intermédiaire, et à régler ladite proportion estimée dudit premier constituant conformément aux différences entre ladite température estimée et ladite température mesurée ; et
   d) à répéter les étapes b) et c) jusqu'à ce que la différence entre ladite température estimée et ladite température mesurée soit à l'intérieur d'une plage prédéterminée.

20. Appareil selon la revendication 17, dans lequel lesdits moyens de calcul sont programmés pour effectuer l'étape b) en calculant d'abord à partir de ladite proportion estimée dudit premier constituant une activité estimée dudit second constituant et en calculant ensuite ladite température estimée à partir de ladite activité estimée.

21. Appareil selon la revendication 20, dans lequel lesdits moyens de calcul sont programmés pour calculer ladite activité estimée à partir de ladite proportion estimée dudit premier constituant dans ledit mélange intermédiaire au moyen d'une équation de la forme

$$\gamma = Exp[AX^2 + BX^3 + CX^4 + DX^5]$$

où $\gamma$ est ladite activité estimée du second constituant, X est ladite proportion estimée dudit premier constituant et A, B, C et D sont des constantes.

22. Appareil selon la revendication 20, dans lequel, pour permettre la présence de deux matières différentes dans ledit premier constituant, lesdits moyens de calcul sont programmés de façon à calculer des activités estimées séparées pour ledit second constituant pour chacune des deux matières différentes, puis pour effectuer une moyenne de ces deux activités estimées sur une base pondérée afin de produire une activité estimée finale, et pour calculer ensuite ladite température estimée à partir de ladite activité estimée finale.

23. Appareil selon l'une quelconque des revendications 16-22, dans lequel lesdits seconds moyens chauffants variables comprennent des moyens destinés à amener un fluide chaud audit second évaporateur, ledit second évaporateur étant disposé de façon à permettre un échange de chaleur entre ledit fluide chaud et ledit mélange liquide intermédiaire, et un ajustement dudit débit d'apport de chaleur par lesdits seconds moyens chauffants variables est effectué par ajustement de l'amenée dudit fluide chaud audit second évaporateur.

24. Appareil selon l'une quelconque des revendications 16-22, comprenant en outre un capteur de température auxiliaire disposé de façon à mesurer la température du mélange liquide final pendant qu'il est encore sensiblement en équilibre avec sa propre vapeur et un moyen de calcul auxiliaire destiné à calculer, à partir de la température mesurée par ledit capteur de température auxiliaire, les proportions desdits premier et second constituants dans ledit mélange liquide final.

25. Appareil selon l'une quelconque des revendications 16-22, dans lequel ledit second évaporateur comprend une partie chauffante, dans laquelle est formée ladite entrée et dans laquelle de la chaleur peut être fournie audit mélange liquide intermédiaire, une partie vaporisante, dans laquelle sont disposées lesdites sorties pour ladite seconde vapeur et ledit mélange liquide final et dans laquelle ledit mélange liquide intermédiaire peut bouillir, et une conduite raccordant ladite partie chauffante à ladite partie vaporisante, ledit appareil ayant un capteur de température disposé de façon à mesurer la température dudit mélange liquide intermédiaire passant dans ladite conduite et à envoyer un signal représentatif de ladite température auxdits moyens de calcul.

26. Appareil selon la revendication 25, dans lequel ledit second évaporateur comprend en outre une partie à dépression disposée de façon à recevoir le mélange liquide final quittant la sortie de ladite partie vaporisante et à appliquer une pression inférieure à celle de l'atmosphère audit mélange liquide final, afin de provoquer une évaporation supplémentaire dudit second constituant à partir dudit mélange liquide final.

27. Appareil selon la revendication 26, dans lequel ladite partie à dépression est pourvue d'un capteur de température de partie à dépression disposé de façon à mesurer la température du mélange liquide final quittant la partie à dépression et à générer un signal de température représentatif de ladite température, un régulateur de pression disposé de façon à maintenir sensiblement constante la pression inférieure à celle de l'atmosphère dans ladite partie à dépression et à générer un signal de pression représentatif de ladite pression inférieure à celle de l'atmosphère, et des moyens de calcul de la partie à dépression agencés de façon à recevoir lesdits signaux de température et de pression destinés à calculer la composition dudit mélange liquide final quittant ladite partie à dépression.

28. Appareil selon l'une quelconque des revendications 16-27, comportant en outre un capteur d'écoulement disposé de façon à mesurer le débit d'écoulement dudit mélange liquide intermédiaire arrivant dans ladite entrée dudit second évaporateur et à envoyer un signal représentatif dudit débit d'écoulement auxdits moyens de calcul.

FIG.1

FIG.2

FIG.3

200 — INITIALIZE

202 — SET $X_2 = K_1$, $X_1 = 1-K$

204 — $\gamma_1 = EXP(AX_2^2 + BX_2^3 + CX_2^4 + DX_2^5)$
$\gamma_2 = EXP(EX_2^2 + FX_2^3 + GX_2^4 + HX_2^5)$

$\gamma = (X_{CS}\gamma_1 + X_S\gamma_2)/(X_{CS} + X_S)$

208 — $P = 14 \cdot 696/(GAMMA \cdot X_1) - 14 \cdot 696$

210 — $T = 1 \cdot 8\left(3816 \cdot 44\left[18 \cdot 3036 - LOG\left\{\dfrac{760(P+14 \cdot 696)}{14 \cdot 696}\right\} + 46 \cdot 13\right]^{-1}\right) - 460$

212 — $F = T_m - T$

214 — $|F| < 0 \cdot 1?$ — Y — OUTPUT $X_2$

N

216 — RUN BOUNDED SECANT ALGORITHM TO CALCULATE $\Delta X_2$

$X_2 = X_2 + \Delta X_2$ — 218

EP 0 244 079 B1

$$\frac{K_2 * EXP(-t_2 s)}{(T_2 s + 1)}$$

Z ——
FEED ENTHALPY

$Y_2$

$Y *$
COOKER OUTLET
ENTHALPY

$$\frac{K_1 * EXP(-t_1 s)}{(T_1 s + 1)}$$

X ——
STEAM FLOW

$Y_1$

FIG. 4

FEED UPSET

$$\frac{K_2 \, exp(-t_2 S)}{(T_2 S+1)}$$

$Y_2$

$Z$

$K_f$

$exp(-t_f \cdot s)$

$$\frac{(T_{LD}S+1)}{(T_{LG}S+1)}$$

$X$

$$\frac{K_1 exp(-t_1 S)}{(T_1 S+1)}$$

$Y_1$

$Y*$

CONTROLLER

STEAM
FLOW

EP 0 244 079 B1

FIG. 5